# EUROPEAN PATENT SPECIFICATION

(11) **EP 0 552 172 B1**
(45) Date of publication and mention of the grant of the patent: **08.11.1995**
(21) Application number: 91915724.8
(22) Date of filing: 20.08.1991
(51) Int. Cl.: B01D 53/92, B01D 53/94, B01J 23/40, B01J 23/56

(54) **USE OF SUPPORTED PLATINUM GROUP METAL CATALYSTS**
VERWENDUNG EINES TRÄGERKATALYSATOR AUF BASIS EINES METALLS DER PLATINGRUPPE
UTILISATION DES CATALYSEURS EN METAL DU GROUPE DE PLATINE SUPPORTE

(30) Priority: 20.09.1990 GB 9020568
(43) Date of publication of application: 28.07.1993
(73) Proprietor: ROVER GROUP LIMITED, Bickenhill Birmingham B37 7HQ (GB); UNIVERSITY OF WARWICK, Coventry, Warwickshire CV4 7AL (GB)
(72) Inventor: BHATTACHARYA, Ashok, Birmingham B13 9RY (GB)
(74) Representative: Turner, Peter Charles
(86) International application number: GB9101411
(87) International publication number: WO9204965

(56) References cited:
- DE-A- 3 726 580
- FR-A- 2 177 951
- FR-A- 2 306 739
- US-A- 3 894 965

## Description

This invention relates to use of catalytic compositions comprising a platinum group metal oxide component, and preferably a palladium oxide component, supported on a metal oxide. By "a platinum group metal" we mean at least one of Pt, Pd, Rh or Ir. Such catalysts are, for example, effective in catalysing the reaction between nitric oxide and carbon monoxide to yield nitrogen and carbon dioxide. As nitric oxide and carbon monoxide are two of the pollutants found in vehicle exhaust gases, the catalysts used in the present invention are expected to be useful in the purification of such gases. FR-A- 2 177 951 discloses a catalyst comprising a base of eta- or gamma-aluminium carrying at least two metal oxides. One of these must be chromium oxide and the other must be an oxide selected from those of titanium, vanadium, manganese, iron, cobalt, nickel, copper or zinc.

We have now discovered that the nature of the support critically affects the catalytic effect of the platinum group metal and that the use of certain metal oxides as supports enhances the catalytic effect.

According to one aspect of the invention, we provide use of a catalyst comprising a partially-reduced platinum group metal oxide component (which includes both the platinum group metal and at least one oxide thereof) carried on a support comprising an oxide of a metal selected from Ca, Sr, Ba, Sc, Y, La, Ti, Zr, Hf, and the lanthanides to promote the reaction between nitric oxide and carbon monoxide to yield nitrogen and carbon dioxide.

The metal oxide which constitutes the support may be a single metal oxide, such as Y₂O₃, Zr0₂, La₂0₃ or a mixed oxide, especially one of the perovskite structure (AB0 ₃) where A is an alkaline earth metal and B is another metal such as Ti, Zr, Hf, or Ce, for example BaCeO ₃ , SrCe0 ₃ , SrZr0 ₃ , and SrTi0 ₃ .

The platinum group metal oxide component must comprise both the platinum group metal and at least one of its oxides.

We have observed that if the catalyst is reduced so that substantially all of the platinum group metal component becomes the metal itself, inferior results are obtained.

We have observed that, for those supports that appear to give the best results, the charge to size ratio of the metal ions seems to be relatively high.

The palladium or other platinum group metal oxide component may be deposited on a dispersion of a carrier as specified above (e.g. Y ₂ 0 ₃ ) in another carrier, e.g. a conventional carrier such as alumina. Some particles of the platinum group metal oxide component will therefore be carried by particles of the carrier specified in this application (e.g. Y ₂ 0 ₃).

The invention also comprises a method of treating exhaust gases from internal combustion engines to remove NO and CO therefrom, comprising passing them over a catalyst as defined hereinabove.

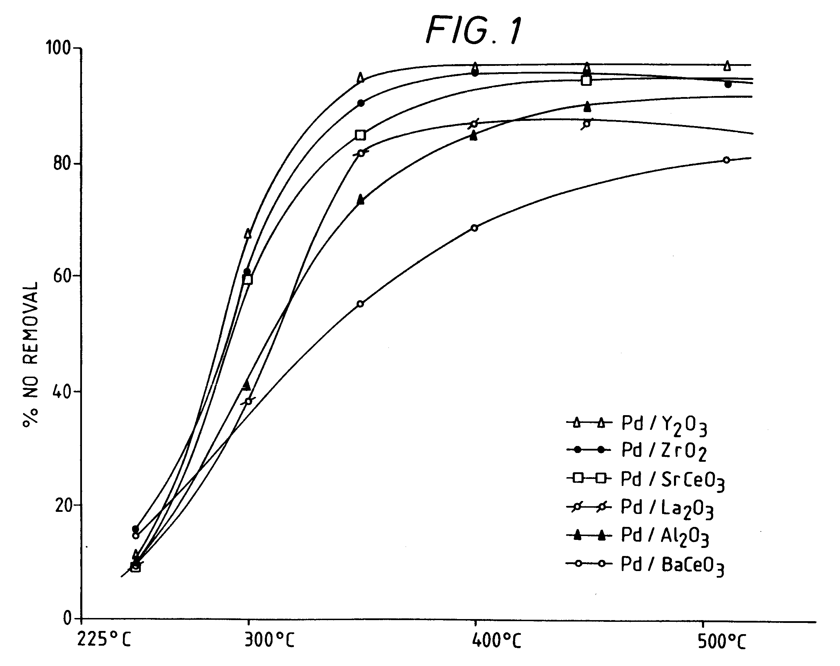

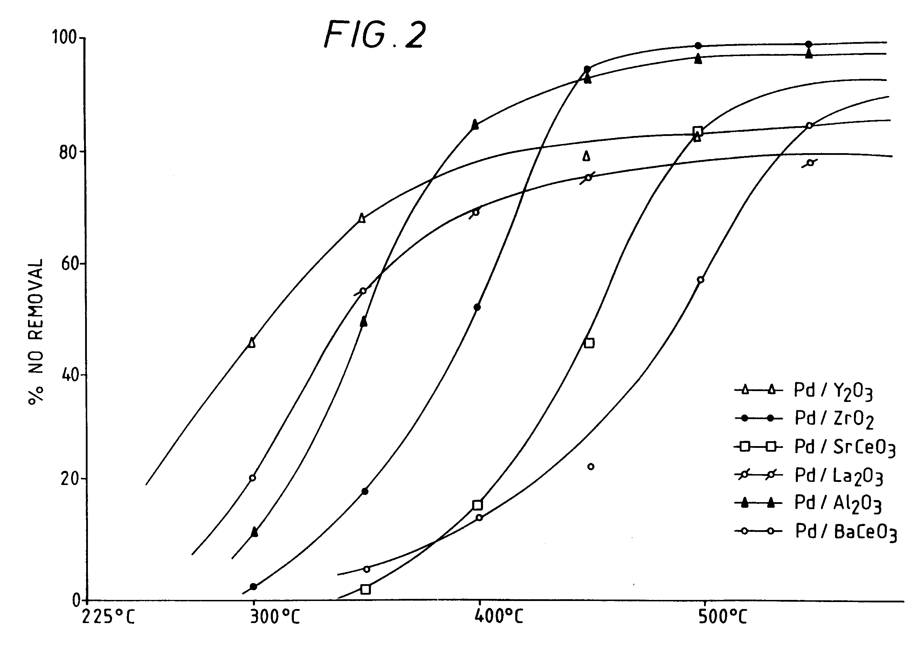

The invention will now be described in more detail with the aid of specific examples, and with reference to accompanying Figures 1 and 2.

Experiments were conducted utilizing a gas mixture comprising 0.1% nitric oxide, 0.75% carbon monoxide, the balance being nitrogen. This gas mixture was passed over a variety of catalysts at various temperatures and the percentage of NO removal was observed at those temperatures. The catalyst was prepared by depositing a solution of palladium acetate or palladium nitrate on the particular oxide carrier selected, and then calcining at a temperature of at least 500° C to decompose the palladium compound to a mixture of metallic palladium and palladium oxides, so that the resulting catalyst contained about 1% of palladium. The resulting catalyst was then diluted 10-fold utilizing magnesium aluminium silicate (cordiorite). The purpose of this inert diluent was simply to emphasise differences between the catalytic activity of the various catalyst compositions tested. This resulted in a space velocity of 500,000 h⁻¹ under the conditions of the experiment, i.e. a very low contact time: much lower than would ever be observed in a practical vehicle exhaust system.

Tests were carried out utilizing palladium deposited in the above manner on Y ₂ 0 ₃, La ₂ 0 ₃ , Zr0 ₂ , Al₂ 0 ₃ (for purposes of comparison), BaCeO ₃ and SrCe0 ₃ and the results are shown graphically in Figures 1 and 2. It will be observed that catalysts utilizing Y ₂ 0 ₃ and Zr0 ₂ as supports gave almost 100% conversion of NO at a temperature as low as 350 ° C. This is significantly better than the results obtained using a conventional alumina support, where the conversion at 350° C was less than 75%. Catalysts which can catalyse the conversion of NO and CO to relatively-harmless CO ₂ and nitrogen as a relatively low temperature are desirable as internal combustion engine exhaust gas catalysts because such catalyst begin to work effectively more quickly from cold starting.

## Claims

1. Use of a catalyst comprising a partially-reduced platinum group metal oxide component (which includes both the platinum group metal and at least one oxide thereof) carried on a support comprising an oxide of a metal selected from Ca, Sr, Ba, Sc, Y, La, Ti, Zr, Hf, and the lanthanides to promote the reaction between nitric oxide and carbon monoxide to yield nitrogen and carbon dioxide.

2. Use of a catalyst according to claim 1, wherein the platinum group metal is palladium.

3. Use of a catalyst according to claim 1, wherein the support is Y₂0₃, ZrO₂, or La₂0₃.

4. Use of a catalyst according to claim 1, wherein the support is a mixed oxide of the perovskite structure (ABO₃) where A is an alkaline earth metal and B is another metal.

5. Use of a catalyst according to claim 4, wherein the other metal is Ti, Zr, Hf or Ce.

6. Use of a catalyst according to claim 5, wherein the metal oxide is BaCeO₃, SrCeO₃, or SrTiO₃.

7. Use of a catalyst according to any preceding claims wherein the platinum group metal component is deposited on said metal oxide support which support is dispersed on a further carrier.

8. A method of treating internal combustion engine exhaust gases to remove NO and CO therefrom by passing said exhaust gases over a catalyst as defined in any preceding claim.

## Patentansprüche

1. Verwendung eines Katalysators, der eine Komponente aus einem teilweise reduzierten Oxid eines Metalls der Platingruppe (die sowohl das Metall der Platingruppe als auch wenigstens ein Oxid davon einschließt) aufweist, die sich auf einem Träger befindet, der ein Oxid eines Metalls aufweist, das aus Ca, Sr, Ba, Sc, Y, La, Ti, Zr, Hf und den Lanthaniden ausgewählt ist, zur Förderung der Reaktion zwischen Stickoxid und Kohlenmonoxid unter Erzeugung von Stickstoff und Kohlendioxid.

2. Verwendung eines Katalysators nach Anspruch 1, wobei das Metall der Platingruppe Palladium ist.

3. Verwendung eines Katalysators nach Anspruch 1, wobei der Träger Y₂O₃, ZrO₂ oder La₂O₃ ist.

4. Verwendung eines Katalysators nach Anspruch 1, wobei der Träger ein Mischoxid mit Perowskit-Struktur (ABO₃) ist, worin A ein Erdalkalimetall und B ein anderes Metall ist.

5. Verwendung eines Katalysators nach Anspruch 4, wobei das andere Metall Ti, Zr, Hf oder Ce ist.

6. Verwendung eines Katalysators nach Anspruch 5, wobei das Metalloxid BaCeO₃, SrCeO₃ oder SrTiO₃ ist.

7. Verwendung eines Katalysators nach irgendeinem der vorausgehenden Ansprüche, wobei die Komponente mit dem Metall der Platingruppe auf dem genannten Metalloxidträger abgeschieden ist, wobei der Träger auf einem weiteren Träger dispergiert ist.

8. Verfahren zur Behandlung der Auspuffgase eines Verbrennungsmotors, um daraus NO und CO zu entfernen, indem man die Auspuffgase über einen Katalysator leitet, wie er in irgendeinem vorausgehenden Anspruch definiert ist.

## Revendications

1. Utilisation d'un catalyseur comprenant un composant à base d'oxyde de métal du groupe du platine partiellement réduit (comprenant à la fois le métal du groupe du platine et au moins un oxyde de celui-ci) porté par un support comprenant un oxyde d'un métal choisi parmi Ca, Sr, Ba, Sc, Y, La, Ti, Zr, Hf, et les lanthanides, afin de favoriser la réaction entre l'oxyde nitrique et le monoxyde de carbone pour former de l'azote et du dioxyde de carbone.

2. Utilisation d'un catalyseur selon la revendication 1, dans lequel le métal du groupe du platine est le palladium.

3. Utilisation d'un catalyseur selon la revendication 1, dans lequel le support est Y₂O₃, ZrO₂ ou La₂O₃.

4. Utilisation d'un catalyseur selon la revendication 1, dans lequel le support est un oxyde mixte à structure de perovskite (ABO₃) dans laquelle A représente un métal alcalino-terreux et B un autre métal.

5. Utilistaion d'un catalyseur selon la revendication 4, dans lequel l'autre métal est Ti, Zr, Hf ou Ce.

6. Utilisation d'un catalyseur selon la revendication 5, dans lequel l'oxyde de métal est BaCeO₃, SrCeO₃ ou SrTiO₃.

7. Utilisation d'un catalyseur selon l'une quelconque des revendications précédentes, dans lequel le composant à base de métal du groupe du platine est déposé sur le support à base d'oxyde de métal, ce support étant dispersé sur un autre support.

8. Procédé de traitement des gaz d'échappement d'un moteur à combustion interne pour en éliminer NO et CO, en faisant passer ces gaz d'échappement sur un catalyseur tel que défini dans l'une quelconque des revendications précédentes.
